# EUROPÄISCHE PATENTANMELDUNG

(11) **EP 1 681 483 A1**
(43) Veröffentlichungstag der Anmeldung: **19.07.2006**
(21) Anmeldenummer: 06007023.2
(22) Anmeldetag: 06.08.2002
(51) Int. Cl.: F16D 25/10, F16D 21/06, F16D 25/0638, F16D 25/12

(54) **Kupplungssystem mit einer nasslaufenden hydraulisch betätigbaren Mehrfach-Kupplungseinrichtung**

(30) Priorität: 07.09.2001 DE 10143834
(62) Teilanmeldung aus: 02767328.4
(71) Anmelder: ZF Sachs AG, 97424 Schweinfurt (DE)
(72) Erfinder: Ebert, Angelika, 97453 Schonungen-Forst (DE); Großpletsch, Wolfgang, 97422 Schweinfurt (DE); Kraus, Paul, 97464 Niederwerm (DE); Kuhstrebe, Jochen, 97318 Biebelried/Westheim (DE); Kundermann, Wolfgang, 97422 Schweinfurt (DE); Reisser, Wolfgang, 97526 Sennfeld (DE); Steiner, Eduard, 97070 Rottendorf (DE)

(57) **Zusammenfassung**

Eine Mehrfach-Kupplungseinrichtung weist an ihrer Eingangsseite eine an einer Abtriebswelle der Antriebseinheit angekoppelte Eingangsnabe (40) oder Eingangswelle auf, die mit Eingangsseiten der Kupplungsanordnungen in Drehmitnahmeverbindung steht. Für hydraulisch betätigbare Kupplungsanordnungen mit integrierten, sich im Betrieb mitdrehenden hydraulischen Nehmerzylindern (56, 58) bzw. für unter Einwirkung eines Betriebsmediums nasslaufende Kupplungsanordnungen sind in der Eingangsnabe (40) oder einer mit derselben drehfesten Komponente (310) Hydraulikwege (430, 424, 426) und Betriebsmediumwege (100, 428) ausgebildet. Die Nehmerzylinder sind über die Hydraulikwege sowie über wenigstens eine von radial außen oder/und von der Antriebseinheit her in Richtung zur Eingangsnabe bzw. der Komponente geführte Hydraulikleitungen (412, 414) an einer Hydraulikdruckquelle angeschlossen. Den Kupplungsanordnungen ist über die Betriebsmediumwege und über wenigstens eine von radial außen oder/und von der Antriebseinheit her zur Eingangsnabe bzw. der Komponente geführte Betriebsmediumleitung (416) Betriebsmedium von einer Betriebsmediumquelle zuführbar.

## Beschreibung

### Technisches Gebiet

Die Erfindung betrifft eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung aufweist, wobei von den beiden Getriebeeingangswellen die eine sich durch die andere erstreckt, wobei eine Eingangsseite der Kupplungseinrichtung eine an einer Abtriebswelle der Antriebseinheit direkt oder indirekt angekoppelte oder ankoppelbare Eingangsnabe oder Eingangswelle (im Folgenden nur als Eingangsnabe bezeichnet) aufweist, die mit einer Eingangsseite der ersten Kupplungsanordnung und einer Eingangsseite der zweiten Kupplungsanordnung in Drehmitnahmeverbindung steht. Die Erfindung betrifft speziell eine derartige Kupplungseinrichtung, bei der die Kupplungsanordnungen jeweils mit einem integrierten, sich im Betrieb mitdrehenden hydraulischen Nehmerzylinder ausgeführt sind, über den die jeweilige Kupplungsanordnung auf hydraulischem Wege betätigbar ist, sowie eine derartige Kupplungseinrichtung, bei der die Kupplungsanordnungen für ein Laufen unter Einwirkung eines Betriebsmediums vorgesehen, insbesondere als nasslaufende Lamellen-Kupplungsanordnung ausgeführt sind. Die Erfindung betrifft damit femer ein eine derartige Mehrfach-Kupplungseinrichtung umfassendes Kupplungssystem, das ferner ein Hydrauliksystem zur Betätigung der Kupplungsanordnungen auf hydraulischem Wege unter Vermittlung der hydraulischen Nehmerzylinder oder/und ein Betriebsmedium-Versorgungssystem zur Versorgung der Kupplungsanordnungen mit Betriebsmedium umfasst, wobei das Hydrauliksystem wenigstens eine Hydraulikdruckquellenanordnung und eine die hydraulischen Nehmerzylinder mit der Hydraulikdruckquellenanordnung verbindende Hydraulikleitungsanordnung und das Betriebsmedium-Versorgungssystem wenigstens eine Betriebsmediumquellenanordnung und eine Betriebsmediumleitungsanordnung umfasst, über die den Kupplungsanordnungen Betriebsmedium zuführbar ist, wobei darauf hinzuweisen ist, dass es nicht ausgeschlossen ist, dass eine gemeinsame Quellenanordnung sowohl dem Betriebsmedium-Versorgungssystem und dem Hydrauliksystem zugeordnet ist und sowohl Betriebsmedium als auch Hydraulikdruckmedium bereitstellt.

### Stand der Technik

Mehrfach-Kupplungseinrichtungen, speziell Doppel-Kupplungseinrichtun-gen der eingangs angesprochenen Art sind beispielsweise aus der DE 100 04 179 A1 bekannt. Derartige, auch als Doppelkupplungen bezeichnete Kupplungseinrichtungen haben in jüngerer Zeit ein größeres Interesse gefunden, da sie in Verbindung mit einem so genannten Lastschalt- oder Doppelkupplungsgetriebe bei entsprechender Automatisierung einen Fahrkomfort zu bieten versprechen, der dem Fahrkomfort eines herkömmlichen Automatikgetriebes mit Drehmomentwandler entspricht, ohne dass die Verluste eines Drehmomentwandlers auftreten. Ein wichtiger Faktor bei der Auslegung der Kupplungseinrichtungen ist der für die Kupplungseinrichtung benötigte Bauraum, insbesondere der benötigte axiale Bauraum, das Gewicht der Kupplungseinrichtung und die Dichtheit und Dauerfestigkeit von Drehzuführungen zur Zufuhr von Betriebsmedium bzw. Hydraulikdruckmedium.

Bei den aus der DE 100 04 179 A1 bekannten Konstruktionen ist getriebeseitig eine Anschlusshülse vorgesehen, die eine mit Ölkanälen ausgeführte, an der radial äußeren Getriebeeingangswelle gelagerte Lagerhülse der Doppelkupplungen aufnimmt und mit dieser Drehdurchführungen bildet. Sowohl die Zufuhr des Hydraulikmediums zu den beiden Nehmerzylindem als auch die Zufuhr von Kühlöl erfolgt von der Getriebeseite her unter Vermittlung der Lagerhülse und der Aufnahmehülse.

Die Lagerhülse und die zugeordneten Aufnahmehülsen weisen ein zumindest nach heutigen Maßstäben nicht unerhebliches Gewicht auf und tragen auch nicht unerheblich zur axialen Gesamt-Baulänge der Kupplungseinrichtung bei.

### Darstellung der Erfindung

Um dem Konstrukteur bei der Auslegung der Kupplungseinrichtung bzw. des Getriebes, insbesondere des gesamten Antriebsstrangs, eine größere Freiheit zu geben, schlägt die Erfindung demgegenüber nach einem ersten Aspekt für das angesprochene Kupplungssystem vor, dass in der Eingangsnabe oder/und wenigstens einer weiteren, mit der Eingangsnabe zur Drehmitnahme, vorzugsweise drehfest verbundenen Komponente der Kupplungseinrichtung wenigstens ein Hydraulikkanal oder Hydraulikdurchgang ausgebildet ist, dass wenigstens einer der Nehmerzylinder über den wenigstens einen Hydraulikkanal bzw. Hydraulikdurchgang sowie über die Hydraulikleitungsanordnung an der Hydraulikdruckquellenanordnung angeschlossen oder anschließbar ist, wobei der Hydraulikkanal bzw. Hydraulikdurchgang einer Drehdurchführung zugehörig oder daran angeschlossen oder anschließbar ist, und dass die Hydraulikleitungsanordnung wenigstens eine von radial außen oder/und von der Antriebseinheit her in Richtung zur Eingangsnabe bzw. der Komponente geführte oder führbare Hydraulikleitung aufweist, über die die Drehdurchführung an der Hydraulikdruckquellenanordnung angeschlossen oder anschließbar ist. Alternativ oder zusätzlich wird nach diesem Aspekt der Erfindung ferner vorgeschlagen, dass in der Eingangsnabe oder/und wenigstens einer weiteren, mit der Eingangsnabe zur Drehmitnahme, vorzugsweise drehfest verbundenen Komponente der Kupplungseinrichtung wenigstens ein Betriebsmediumkanal oder Betriebsmediumdurchgang ausgebildet ist, dass wenigstens einer der Kupplungsanordnungen über den wenigstens einen Betriebsmediumkanal bzw. Betriebsmediumdurchgang sowie über die Betriebsmediumleitungsanordnung Betriebsmedium von der Betriebsmediumquellenanordnung zuführbar ist, wobei der Betriebsmediumkanal bzw. Betriebsmediumdurchgang einer Drehdurchführung zugehörig oder daran angeschlossen oder anschließbar ist, und dass die Betriebsmediumleitungsanordnung wenigstens eine von radial außen oder/und von der Antriebseinheit her in Richtung zur Eingangsnabe bzw. der Komponente geführte oder führbare Betriebsmediumleitung aufweist, über die der Drehdurchführung Betriebsmedium von der Betriebsmediumquellenanordnung zuführbar ist.

Nach dem Erfindungsvorschlag wird die Eingangsnabe bzw. die sich mit der Eingangsnabe zur Drehmitnahme verbundene Komponente in die Zufuhr von Betriebsmedium in die Kupplungseinrichtung bzw. für den Anschluss wenigstens eines der hydraulischen Nehmerzylinder an der zugeordneten Hydraulikdruckquellenanordnung einbezogen, und es ist die von radial außen oder/und von der Antriebseinheit zur Kupplungseinrichtung herangeführte Leitungsanordnung vorgesehen, so dass die Lagerhülse gemäß den Konstruktionen der DE 100 04 179 A1 insoweit entbehrlich erscheint und ggf. entfallen kann, wodurch Gewicht eingespart und die Bauteilevielfalt reduziert wird. Auf Grundlage des Erfindungsvorschlags werden vielfältige Möglichkeiten für die Zufuhr von Betriebsmedium bzw. für die hydraulische Anbindung der Nehmerzylinder an der zugeordneten Hydraulikdruckquelle eröffnet. Insbesondere ist es nicht mehr erforderlich, Platz für eine Hydraulikmedium- bzw. Betriebsmediumzuführeinrichtung am bzw. im Getriebe vorzusehen, und es kommen auch Getriebebauarten in Betracht, die eine derartige Lösung überhaupt nicht erlaubt. Die Verwendung von elektrisch angetriebenen Pumpenanordnungen für die Bereitstellung des Hydraulikmediums bzw. Betriebsmediums wird besonders einfach und es wird in diesem Zusammenhang insbesondere daran gedacht, dass diese im bzw. in der Nähe des Kupplungsbauraums angeordnet werden können. In diesem Falle wäre eine Zuführung von der Getriebeseite her konstruktiv nur aufwendig zu realisieren.

Gegenüber der bekannten Lösung gemäß DE 100 04 179 A1 mit der Lagerhülse ergibt sich überdies der Vorteil, dass die Drehdurchführung nicht durch die am Getriebe angebaute Kupplungseinrichtung verdeckt ist. Bei der Konstruktion gemäß der DE 100 04 179 A1 besteht die Gefahr, dass Dichtungen an den Bohrungen der Hülse beim Einbau der Kupplungseinrichtung beschädigt werden. Diese Gefahr ist vermieden oder zumindest beherrschbar, wenn die Drehdurchführung unabhängig von der Montage der Kupplungseinrichtung am Getriebe fertiggestellt wird oder/und wenn die Drehdurchführung im montierten Zustand der Kupplungseinrichtung noch zugänglich ist.

Bevorzugt ist eine integral ausgeführte Leitungsanordnung, die von radial außen oder/und von der Antriebseinheit her in Richtung zur Eingangsnabe bzw. der Komponente geführt oder führbar ist und die wenigstens eine Hydraulikleitung und die wenigstens eine Betriebsmediumleitung aufweist.

Vorteilhaft kann eine integral ausgeführte Drehdurchführung vorgesehen sein, die wenigstens einen an der Hydraulikleitungsanordnung angeschlossenen Hydraulikabschnitt und wenigstens einen an der Betriebsmediumleitungsanordnung angeschlossenen Betriebsmediumabschnitt aufweist.

Die Drehdurchführung bzw. der Hydraulikabschnitt oder/und der Betriebsmediumabschnitt kann/können als axiale Drehdurchführung ausgeführt sein, die eine Betriebsmediumflussverbindung bzw. Hydraulikdruckmediumverbindung in axialer Richtung vermittelt. Eine andere Möglichkeit ist, dass die Drehdurchführung bzw. der Hydraulikabschnitt oder/und der Hydraulikmediumabschnitt als radiale Drehdurchführung ausgeführt ist, die eine Betriebsmediumflussverbindung bzw. Hydraulikdruckmediumflussverbindung in radialer Richtung vermittelt.

Die Drehdurchführung kann einen im Betrieb im Wesentlichen stationären Statorabschnitt und einen im Betrieb rotierenden Rotorabschnitt aufweisen. Der Rotorabschnitt kann von der Eingangsnabe selbst oder/und der mit der Eingangsnabe zur Drehmitnahme verbundenen Komponente gebildet sein, wobei die mit der Eingangsnabe zur Drehmitnahme verbundene Komponente vorzugsweise in einem Momentenübertragungsweg zwischen einer die Eingangsnabe umfassenden Eingangsseite der Kupplungseinrichtung und wenigstens einer Ausgangsseite der Kupplungseinrichtung liegt. Die Komponente kann beispielsweise ein Mitnehmerblech oder dergleichen sein, das die Eingangsnabe mit einem Lamellenträger der Kupplungseinrichtung verbindet.

In der Regel wird die Kupplungseinrichtung in einem von einer Getriebegehäuseglocke begrenzten Aufnahmeraum aufgenommen sein. Der Aufnahmeraum kann, beispielsweise im Falle von nasslaufenden Lamellen-Kupplungsanordnungen, durch eine ggf. deckelartige Wandung in Richtung zur Antriebseinheit geschlossen sein, wobei eine Öffnung zur Ankopplung der Eingangsnabe an einer Abtriebswelle der Antriebseinheit, ggf. über eine Torsionsschwingungsdämpferanordnung, vorgesehen sein wird. Hierzu wird weiterbildend vorgeschlagen, dass die wenigstens eine Hydraulikleitung oder/und die wenigstens eine Betriebsmediumleitung zumindest bereichsweise an der Wandung festgelegt oder in die Wandung integriert ist oder/und dass der Statorabschnitt der Drehdurchführung an der Wandung gehalten oder in diese integriert ist.

Man kann vorteilhaft vorsehen, dass der Statorabschnitt der Drehdurchführung über wenigstens ein Radiallager oder/und wenigstens eine Axiallager an der Eingangsnabe oder/und der mit der Eingangsnabe zur Drehmitnahme verbundenen Komponente relativverdrehbar gelagert ist oder/und dass der Statorabschnitt in einer zugeordneten Aufnahme eines den Rotorabschnitt bildenden Bereichs der Eingangsnabe aufgenommen ist.

Eine bevorzugte Ausgestaltung zeichnet sich dadurch aus, dass die wenigstens eine Hydraulikleitung oder/und die wenigstens eine Betriebsmediumleitung in einem Axialbereich zwischen der Kupplungseinrichtung und der Antriebseinheit, gegebenenfalls in einem Axialbereich zwischen den Kupplungseinrichtung und einer die Kupplungseinrichtung mit der Antriebseinheit verbindenden Torsionsschwingungsdämpferanordnung, von radial außen zur Drehdurchführung geführt oder führbar ist.

Montage und Wartung wird besonders einfach, wenn die wenigstens eine Hydraulikleitung oder/und die wenigstens eine Betriebsmediumleitung mit der Drehdurchführung oder/und mit einer getriebegehäuseseitigen oder antriebseinheitsseitigen Anschlussstelle mittels einer Steckverbindung verbunden oder verbindbar ist.

Die Erfindungs- und Weiterbildungsvorschläge gemäß dem ersten Aspekt der Erfindung können vorteilhaft auf Grundlage einer Konstruktion ausgeführt werden, wie sie im Folgenden angegeben wird, wobei dieser Konstruktion aber eine eigenständige Erfindungsqualität zukommt und damit unabhängig von der Ausbildung der Eingangsnabe bzw. der weiteren, mit der Eingangsnabe zur Drehmitnahme verbundenen Komponente mit wenigstens einem Kanal oder Durchgang unter Schutz gestellt werden soll.

Die Erfindung geht diesbezüglich aus von einer Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Lamellen-Kupplungsanordnung und eine einer zweiten Getriebeeingangswelle zugeordnete zweite Lamellen-Kupplungsanordnung aufweist, wobei von den beiden Getriebeeingangswellen die eine sich durch die andere erstreckt und von einem ersten Lamellenpaket der ersten Kupplungsanordnung und einem zweiten Lamellenpaket der zweiten Kupplungsanordnung das eine das andere zumindest in einem axialen Überlappungsbereich radial außen umgibt, wobei eine Eingangsseite der Kupplungseinrichtung eine an einer Abtriebswelle der Antriebseinheit direkt oder indirekt angekoppelte oder ankoppelbare Eingangsnabe oder Eingangswelle (im Folgenden nur als Eingangsnabe bezeichnet) aufweist, die mit einem Außenlamellenträger der ersten Kupplungsanordnung und einem Außenlamellenträger der zweiten Kupplungsanordnung in Drehmitnahmeverbindung steht, wobei die Außenlamellenträger jeweils einen sich bezogen auf eine Drehachse der Kupplungseinrichtung im Wesentlichen axial erstreckenden, als Eingangsseite der jeweiligen Kupplungsanordnung dienenden Lamellenhalteabschnitt und einen sich von diesem in radialer Richtung anschließenden, mit dem Lamellenhalteabschnitt einstückigen oder daran fest angebrachten Trägerabschnitt aufweisen, und wobei ein jeweiliger Innenlamellenträger der ersten und zweiten Kupplungsanordnung, der als Ausgangsseite der betreffenden Kupplungsanordnung dient, mit der ersten bzw. zweiten Getriebeeingangswelle in Drehmitnahmeverbindung steht oder bringbar ist.

Eine derartige Doppelkupplungseinrichtung ist aus der schon erwähnten DE 100 04 179 A1 bekannt. Die beiden Außenlamellenträger weisten jeweils einen an der oben schon erwähnten Hülse angebrachten Trägerabschnitt auf, der sich von der Hülse (also von radial innen) zum Lamellenhalteabschnitt (also nach radial außen) erstreckt.

Demgegenüber schlägt die Erfindung nach einem zweiten Aspekt vor, dass der Trägerabschnitt des zum radial inneren Lamellenpaket zugehörigen Außenlamellenträgers am Lamellenhalteabschnitt des zum radial äußeren Lamellenpaket zugehörigen Außenlamellenträgers gehalten ist und sich von diesem nach radial innen erstreckt.

Der Erfindungsvorschlag eröffnet viele Vorteile. So kann die Kupplungseinrichtung besonders kompakt ausgeführt werden. Ferner wird die Möglichkeit eröffnet, die beiden Außenlamellenträger einfach durch Ineinanderstecken zur gemeinsamen Drehung miteinander zu verbinden, wobei vorzugsweise den Außenlamellen des radial äußeren Lamellenpakets zugeordnete Mitnahmeformationen am betreffenden Trägerabschnitt ausgenutzt werden, die mit entsprechenden Gegen-Mitnahmeformationen am Trägerabschnitt des zum radial inneren Lamellenpaket zugehörigen Außenlamellenträgers zusammenwirken.

Die Kupplungsanordnungen können jeweils mit einem integrierten, sich im Betrieb mitdrehenden hydraulischen Nehmerzylinder ausgeführt sein, über den die jeweilige Kupplungsanordnung auf hydraulischen Wege betätigbar ist. Hierzu wird weiterbildend vorgeschlagen, dass ein Nehmerzylinderraum des zur Betätigung des radial äußeren Lamellenpakets dienenden Nehmerzylinders zwischen einem die Eingangsnabe mit dem Lamellenhalteabschnitt des diesem Lamellenpakets zugehörigen Außenlamellenträgers koppelnden Mitnehmer und einem Betätigungskolben des Nehmerzylinders ausgebildet ist und dass der Betätigungskolben sich im Wesentlichen in axialer Richtung erstreckende Betätigungsabschnitte aufweist, denen Aussparungen im Trägerabschnitt des zum radial inneren Lamellenpaket zugehörigen Außenlamellenträgers zugeordnet sind, um durch die Aussparungen auf das radial äußere Lamellenpaket wirken zu können-Femer wird vorgeschlagen, dass ein Nehmerzylinderraum des zur Betätigung des radial inneren Lamellenpakets dienenden Nehmerzylinders zwischen einer Wandung und einem Betätigungskolben des Nehmerzylinders ausgebildet ist, wobei die Wandung einen Fliehkraftdruckausgleichsraum begrenzt, der dem Betätigungskolben der Kupplungsanordnung mit dem radial äußeren Lamellenpaket zugeordnet ist.

Die Erfindung stellt femer einen Kraftfahrzeug-Antriebsstrang bereit, der eine vorzugsweise als Verbrennungsmotor ausgeführte Antriebseinheit, ein Getriebe (insbesondere Lastschaltgetriebe) und ein erfindungsgemäßes Kupplungssystem bzw. eine erfindungsgemäße Kupplungseinrichtung aufweist.

Die Erfindung wird im Folgenden anhand von in den Figuren gezeigten Ausführungsbeispielen näher erläutert.
- Fig. 1: zeigt in einer geschnittenen Darstellung eine in einem Antriebsstrang eines Kraftfahrzeugs zwischen einem Getriebe und einer Antriebseinheit (nicht dargestellt) angeordnete Doppelkupplung mit zwei nasslaufenden Lamellen-Kupplungsanordnungen, die auf hydraulischem Wege betätigbar sind.
- Fig. 2: zeigt eine Detailvergrößerung der Fig. 1 im Bereich einer der Doppelkupplung zugehörigen Drehdurchführung.
- Fig. 3: zeigt in einer Fig. 2 entsprechenden Darstellung eine Ausführungsvariante für eine Drehdurchführung der Doppelkupplung.
- Fig. 4: zeigt in einer Fig. 1 entsprechenden Darstellung ein weiteres Ausführungsbeispiel einer erfindungsgemäßen Doppelkupplung.

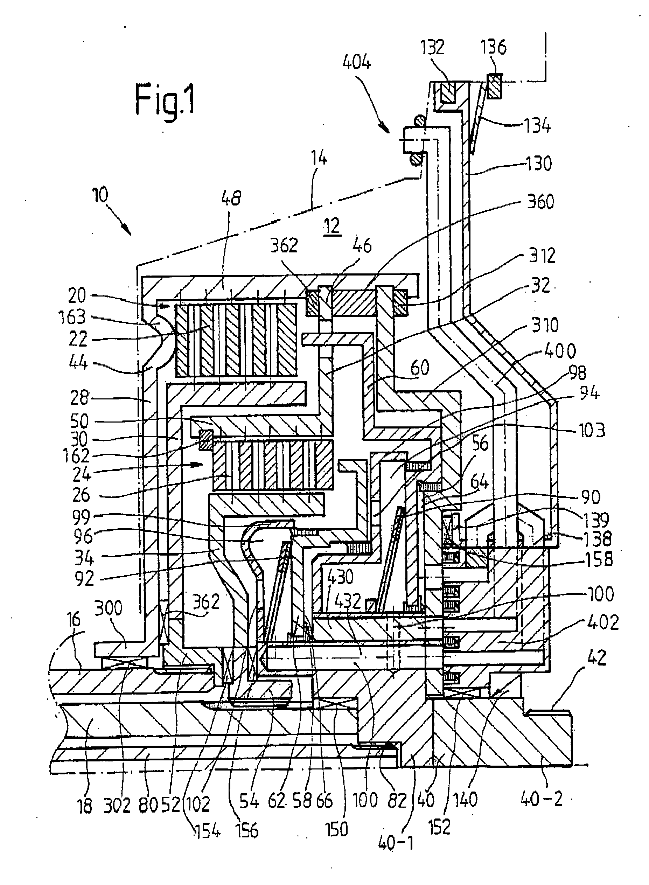

Fig. 1 zeigt eine so genannte Doppelkupplung 10, die in einem Aufnahmeraum 12 einer Getriebegehäuseglocke 14 eines so genannten Lastschaltgetriebes mit zwei radial geschachtelten Getriebeeingangswellen 16 und 18 angeordnet ist. Der äußeren Getriebeeingangswelle 16 können beispielsweise die Getriebegänge 2, 4 und 6 und der inneren Getriebeeingangswelle 18 können beispielsweise die Getriebegänge 1, 3 und 5 sowie R (Rückwärtsgang) zugeordnet sein.

Die Doppelkupplung weist eine radial äußere Kupplungsanordnung 20 mit einem Lamellenpaket 22 und eine radial innere Kupplungsanordnung 24 mit einem Lamellenpaket 26 auf. Die Außenlamellen des Lamellenpakets 22 werden durch einen Außenlamellenträger 28 zur gemeinsamen Drehung mit diesem gehalten. Die Innenlamellen dieses Lamellenpakets 22 werden durch einen Innenlamellenträger 30 zur gemeinsamen Drehung mit diesem gehalten. Die Außenlamellen des Lamellenpakets 26 werden durch einen Außenlamellenträger 32 zur gemeinsamen Drehung mit diesem gehalten, der selbst vom Außenlamellenträger 28 gehalten und mit diesem zur gemeinsamen Drehung verbunden ist. Die Innenlamellen dieses Lamellenpakets 24 werden durch einen Innenlamellenträger 34 zur gemeinsamen Drehung mit diesem gehalten. Das Lamellenpaket 22 umschließt radial außen das Lamellenpaket 26.

Das Antriebsmoment von der Antriebseinheit wird in eine Eingangsnabe 40 der Doppelkupplung eingeleitet, und zwar über Mitnahmeformationen 42, ggf. eine Steckverzahnung 42, der Eingangsnabe 40. Die Eingangsnabe ist beim vorliegenden Beispiel mehrteilig aufgeführt und weist ein die Mitnahmeformationen 42 aufweisendes Teil und Mitnahmeformationen 82, ggf. Steckverzahnungen 82, aufweisendes Teil auf, über die eine sich durch die Getriebeeingangswellen 16 und 18 erstreckende Pumpenantriebswelle 80 mit der Eingangsnabe 40 zur gemeinsamen Drehung verbunden ist. Die beiden Teile der Eingangsnabe werden im Folgenden unter den Bezugszeichen 40-1 und 40-2 angesprochen. Das Antriebsmoment kann von der Antriebseinheit über eine Torsionsschwingungsdämpferanordnung oder Zwei-Massen-Schwungrad-Anordnung auf die Eingangsnabe 40 übertragen werden (vgl. DE 100 04 179 A1).

Ähnlich wie bei der bekannten Konstruktion gemäß DE 100 04 179 A1 wird das vermittels der Mitnahmeformationen 42 auf die Eingangsnabe 40 übertragene Antriebsmoment über einen Mitnehmer 310, der beispielsweise an der Eingangsnabe 40 angeschweißt oder über Mitnahmeformationen und Befestigungsmittel unverdrehbar an dieser gehalten ist, auf einen Außenlamellenträger-Lamellenhalteabschnitt 48 der radial äußeren Kupplungsanordnung 20 übertragen. Der Mitnehmer 310 ist durch einen Sicherungsring 312 in Richtung zur Antriebseinheit am Abschnitt 48 axial gesichert.

Der sich im Wesentlichen in axialer Richtung erstreckende Lamellenhalteabschnitt 48, der die Eingangsseite der radial äußeren Kupplungsanordnung 20 bildet, schließt sich an einen sich im Wesentlichen in radialer Richtung erstreckenden Trägerabschnitt 44 an, der radial innen einen Hülsenabschnitt 300 aufweist, der über ein Radiallager 302 an der radial äußeren Getriebeeingangswelle 16 gelagert ist. Der Außenlamellenträger 32 weist einen in Mitnahmeformationen des Lamellenhalteabschnitts 48 mit entsprechenden Gegen-Mitnahmeformationen eingreifenden Trägerabschnitt 46 auf, der sich vom Lamellenhalteabschnitt 48 nach radial innen erstreckt, und an den sich ein sich im Wesentlichen in axialer Richtung erstreckender Lamellenhalteabschnitt 50 anschließt. Der Trägerabschnitt 46 ist in Richtung zur Antriebseinheit über einen Abstandsring 360 und den Mitnehmer 310 am Sicherungsring 312 abgestützt und ist in Richtung zum Getriebe an einem Sicherungsring 362 abgestützt.

Je nach Einkuppelzustand der beiden Kupplungsanordnungen wird das Drehmoment vom betreffenden Außenlamellenträger über das betreffende Lamellenpaket auf den betreffenden Innenlamellenträger 30 bzw. 34 und von diesem auf die dem Innenlamellenträger 30 zugeordnete Getriebeeingangswelle 16 bzw. auf die dem Innenlamellenträger 34 zugeordnete Getriebeeingangswelle 18 übertragen. Hierzu weisen die Innenlamellenträger jeweils eine Koppelnabe 52 bzw. 54 auf, die auf der zugeordneten Getriebeeingangswelle sitzt und über Mitnahmeformationen mit dieser zur gemeinsamen Drehung verbunden ist.

Die beiden Kupplungsanordnungen werden über einen jeweiligen, in die Doppelkupplung integrierten, sich im Betrieb mitdrehenden hydraulischen Nehmerzylinder 56 bzw. 58 betätigt, die einen Betätigungskolben 60 bzw. 62 aufweisen. Eine jeweilige Druckkammer 64 bzw. 66 der Nehmerzylinder ist über eine noch zu beschreibenden Drehdurchführung und eine flexible Leitungsanordnung 400 an einer zugeordneten Hydraulikdruckquelle, beispielsweise eine Steuer/Regel-Ventilanordnung, angeschlossen.

Bei den beiden Kupplungsanordnungen handelt es sich um Kupplungsanordnungen des NORMALERWEISE-OFFEN-Typs. Hierzu sind von Tellerfedern oder dergleichen gebildete Rückstellfederanordnungen 90 und 92 vorgesehen, die vorliegend in einer jeweiligen, dem Betätigungskolben 60 bzw. 62 zugeordneten Fliehkraftdruckausgleichskammer 94 bzw. 96 aufgenommen sind. Die Fliehkraftdruckausgleichskammern sind zwischen dem jeweiligen Betätigungskolben 60 bzw. 62 und einer an der Eingangsnabe 40 (Teil 40-1) angebrachten Wandung 98 bzw. 99 ausgebildet. In Fig. 1 sind verschiedene, den Druckkammern und den Fliehkraftdruckausgleichskammern zugeordnete Dichtungen eingezeichnet, deren Funktion sich dem Fachmann aus der Zeichnung unmittelbar erschließt. Zur Funktion der Fliehkraftdrurkausgleichskammern wird auf die DE 100 04 179 A1 verwiesen.

Die Fliehkraftdruckausgleichskammern 94 und 96 werden über eine in der Eingangsnabe 40 ausgebildete Kühlölkanalanordnung 100, sowie über die Drehdurchführung und die flexible Leitungsanordnung 400 mit Kühlöl von einer Kühlölversorgung, beispielsweise der erwähnten Ölpumpe, versorgt. Das Kühlöl füllt die jeweilige Fliehkraftdruckausgleichskammer und wirkt insoweit fliehkraftbedingten Hydraulikdruckerhöhungen in der jeweiligen Druckkammer, die auf den jeweiligen Betätigungskolben wirken, entgegen. Aus den Druckausgleichskammern entweicht im Betrieb ein Kühlölstrom durch jeweils wenigstens eine Öffnung 102 bzw. 103 in der betreffenden Wandung 98 bzw. 99. In den Lamellenhalteabschnitten sind Durchtrittsöffnungen für das Kühlöl vorgesehen, so dass das Kühlöl zwischen die Lamellen der Lamellenpakete eintreten und die Lamellen kühlen kann.

Ein die Doppelkupplung 10 enthaltender Teil des Aufnahmeraums 12 dient als Nassraum und ist durch eine deckelartige Verschlusswandung 130, die eine Zentralöffnung für die Eingangsnabe 40 und einen Statorabschnitt 402 der Drehdurchführung aufweist, in Richtung zur Antriebseinheit verschlossen. 132 bezeichnet einen Dichtring, und die im Folgenden nur als Deckel bezeichnete Verschlusswandung 130 ist durch einen Federring 134 gesichert, der sich an einem an der Gehäuseglocke 14 eingesetzten Sicherungsring 136 abstützt.

Die Doppelkupplung 10 ist vermittels ihrer Eingangsnabe 40 über ein Radiallager 150 an der radial inneren Getriebeeingangswelle 18 sowie über ein Radiallager 152 und den Statorabschnitt 402 an einem sich axial erstreckenden, radial inneren Abschnitt 138 des Deckels 130 radial gelagert. Axial ist die Doppelkupplung vermittels ihrer Eingangsnabe über zwei Axiallager 154 und 156 sowie die Koppelnahen 52 und 54 an der radial äußeren Getriebeeingangswelle 16 in Richtung zum Getriebe abgestützt. In Richtung zur Antriebseinheit (Motor) ist die Doppelkupplung 10 über ein zwischen dem Mitnehmer 310 und einem sich an den Abschnitt 138 anschließenden, sich wieder nach radial innen erstreckenden Abschnitt 139 des Deckels 130 angeordnetes Axiallager 158 am Deckel 130 abgestützt. Der als Tellerfeder ausgeführte Federring 134 sorgt dabei für einen Toleranzausgleich. Zu dieser Abstützung trägt auch die Anlage des radial inneren Abschnitts des Mitnehmers 310 am am Deckel 130 befestigten Statorabschnitt 402 der Drehdurchführung bei, und es ist in diesem Zusammenhang auch auf ein Axiallager 362 hinzuweisen, das zwischen den Lamellenträgern 28 und 30 wirksam ist.

Wie aus Fig. 1 zu erkennen, verläuft die flexible Leitungsanordnung 400 im Nassraum zwischen dem Deckel 130 und der Doppelkupplung 10. Ein Anschluss der Leitungsanordnung 400 an einer getriebeseitigen Anschlussstelle kann über eine Steckverbindung 404 realisiert sein, die beim Ausführungsbeispiel radial relativ weit außen liegt und unter Einsatz einfacher O-Ringe ausgeführt ist, die zur Abdichtung dienen.

Die Leitungsanordnung 400 weist eine der Druckkammer 64 zugeordnete Leitung, über die der hydraulische Nehmerzylinder 56 an der zugeordneten Hydraulikdruckquelle angeschlossen bzw. anschließbar ist, eine der Druckkammer 66 zugeordnete Leitung, über die der hydraulische Nehmerzylinder 58 an der zugeordneten Hydraulikdruckquelle angeschlossen bzw. anschließbar ist, und eine gemeinsam den Druckausgleichsräumen 94 und 66 zugeordnete Leitung auf. Die Leitungen sind jeweils mit einem zugeordneten Anschluss des Statorabschnitts 402 der Drehdurchführung verbunden. Der Statorabschnitt 402 ist am Deckel 130 fest und dichtend angebracht. Zwischen dem Statorabschnitt 402 und der Eingangsnabe 40 ist eine Dichtungsanordnung 140 (ggf. umfassend einen Radialwellendichtring) wirksam.

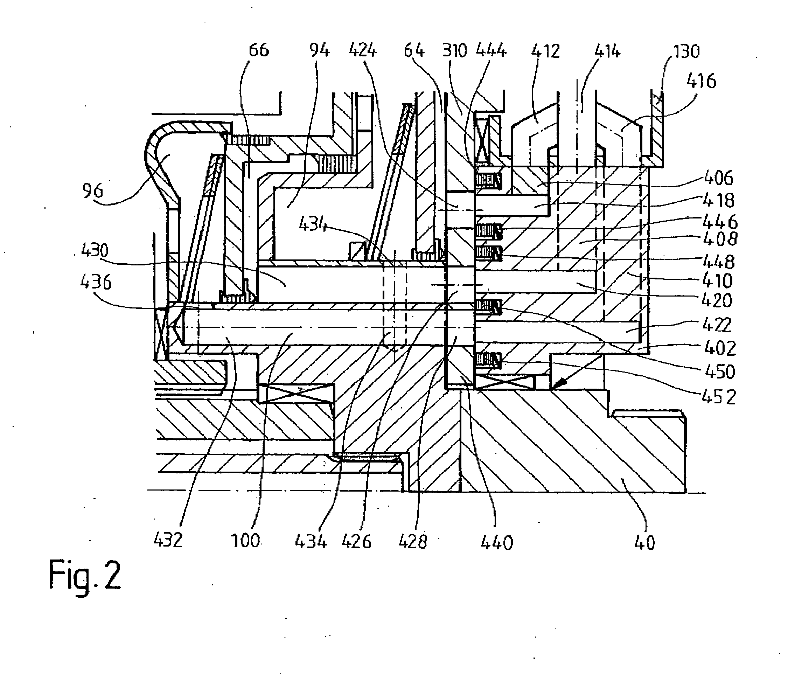

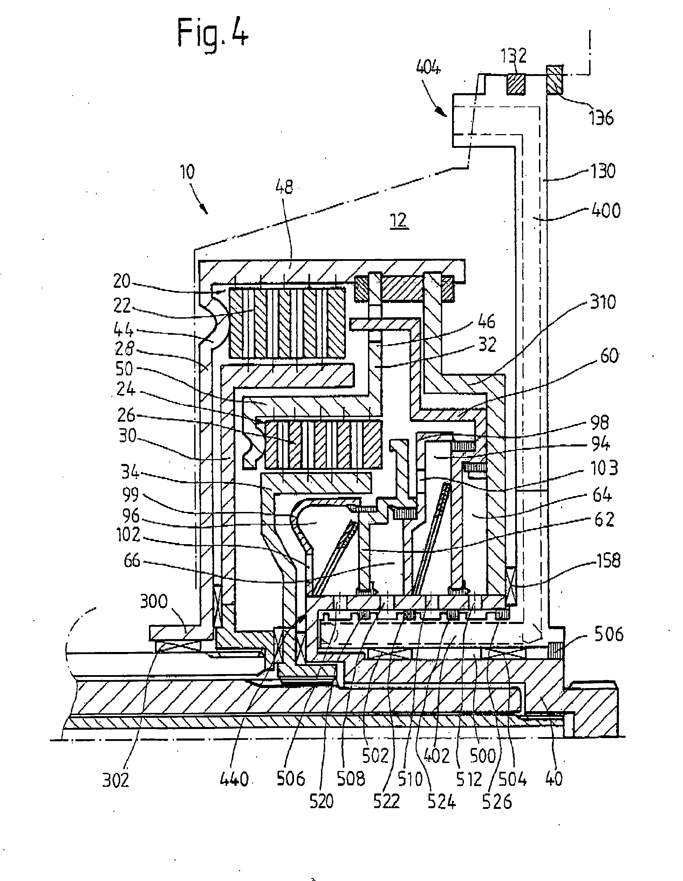

Der Statorabschnitt 402 weist drei axial und in Umfangsrichtung gegeneinander versetzte, sich in radialer Richtung erstreckende Kanäle 406, 408 und 410 auf (vgl. Fig. 2), denen die genannten drei Leitungen (denen in Fig. 4 die Bezugszeichen 412, 414 und 416 zugeordnet sind) angeschlossen sind und die nach radial innen in einen jeweiligen, im Statorabschnitt 402 ausgebildeten Ringkanal 418, 420 bzw. 422 münden.

Den Ringkanälen sind Durchgangsbohrungen 424, 426 und 428 im Mitnehmer 310 zugeordnet, von denen wenigstens eine Durchgangsbohrung 424 in die Druckkammer 64 mündet und von denen die Durchgangsbohrungen 426 und 428 an Axialbohrungen 430 und 432 im Teil 40-1 der Eingangsnabe angeschlossen sind. Es sei darauf hingewiesen, dass in Umfangsrichtung mehrere Durchgangsbohrungen 424, mehrere Durchgangsbohrungen 426 und mehrere Durchgangsbohrungen 428 gegeneinander versetzt vorgesehen sein können, und dass dementsprechend in Umfangsrichtung mehrere Axialbohrungen 430 und mehrere Axialbohrungen 432 gegeneinander versetzt vorgesehen sein können. Die wenigstens eine Axialbohrung 430 mündet in die Druckkammer 66. Die wenigstens eine Axialbohrung 432 bildet mit wenigstens einer Radialbohrung 434 und wenigstens einer Radialbohrung 436 die Kohlölkanalanordnung 100, die mit ihren Bohrungen 434 und 436 in die Druckausgleichkammern 94 und 96 mündet.

Ein die Durchgangsbohrungen 424, 426 und 428 aufweisender radial innerer Abschnitt des Mitnehmers 310 bildet einen Rotorabschnitt 440 der Drehdurchführung. Zur Abdichtung der Ringkanäle 418, 420 und 422 und der Durchgangsbohrungen 424, 426 und 428 sind ringförmige Dichtungen 444, 446, 448, 450 und 452 in eine jeweilige Ringausnehmung des Statorabschnitts 402 eingesetzt, wobei die Dichtungen 444 und 446 den Ringkanal 418, die Dichtungen 448 und 450 den Ringkanal 420 und die Dichtungen 450 und 452 den Ringkanal 422 radial eingabeln. Die Dichtungen sind durch Federelemente gegen den Rotorabschnitt 440 des Mitnehmers 310 gepresst, so dass eine Gleitringdichtung gebildet ist.

Gemäß Vorstehendem ist der hydraulische Nehmerzylinder 56 über die wenigstens eine Durchgangsbohrung 424, den Ringkanal 418, die Bohrung 406 und die Leitung 412 an der zugeordneten Hydraulikdruckquelle angeschlossen oder anschließbar, ist der hydraulische Nehmerzylinder 58 über die wenigstens eine Axialbohrung 430, die wenigstens eine Durchgangsbohrung 426, den Ringkanal 420, die Bohrung 408 und die Leitung 414 an der zugeordneten Hydraulikdruckquelle angeschlossen und sind die Druckausgleichskammern 94 und 96 über die Bohrungen 434 und 436, die wenigstens eine Axialbohrung 432, die wenigstens eine Durchgangsbohrung 428, den Ringkanal 422, die Bohrung 410 und die Leitung 416 an der zugeordneten Kühlölquelle angeschlossen.

Bei der beschriebenen Ausführungsform wird der Statorabschnitt 402 an den Rotorabschnitt 440 vermittels des Deckels 130 axial angepresst, und zwar unter der Wirkung der Ringfeder 134. Anstelle gegenüber dem Deckel 130 gesondert verlaufenden Leitungen könnte man die Leitungen auch am Deckel festlegen oder einen Deckel verwenden, der darin integral ausgeführte Leitungen aufweist. Beispielsweise könnte man den Deckel als Druckgussteil ausführen. In diesem Falle könnte auch der Statorabschnitt 402 im Deckel integriert sein.

Weitere Einzelheiten, die Bedeutung und Funktion einzelner Komopnenten des Ausführungsbeispiels usw. sind dem Fachmann aus Fig. 1 und Fig. 2 ohne Weiteres verständlich. So bezeichnet 162 einen am Außenlamellenträger 32 angebrachten Halte- oder Sicherungsring, der die Außenlamellen am Lamellenhalteabschnitt sichert und die axialen Betätigungskräfte beim Einrücken der betreffenden Kupplungsanordnung aufnimmt. Eine Einbiegung 163 des Außenlamellenträgers 28 stützt in entsprechender Weise das Lamellenpaket 22 bei der Betätigung der Kupplungsanordnung 20 axial ab. Beim gezeigten Beispiel sind die Außenlamellen vergleichsweise massiv als reibbelaglose Lamellen ausgeführt, und die Innenlamellen sind als Belaglamellen ausgeführt. Zur vorteilhaften Ausgestaltungen der Lamellenpakete wird beispielsweise auf die DE 100 04 179 A1 verwiesen, die dem Fachmann auch weitere, das Verständnis der Konstruktion gemäß Fig. 1 erleichternde Hintergrundinformationen gibt.

Die Doppelkupplung 10 kann beispielsweise wie folgt aus Einzelteilen zusammengebaut und in einem Kraftfahrzeug-Antriebsstrang montiert werden. Zuerst wird der Innenlamellenträger 30 der radial äußeren Kupplungsanordnung in den Außenlamellenträger 28 dieser Kupplungsanordnung eingelegt. Anschließend wird das Lamellenpaket 22 axial eingeschoben und der Sicherungsring 362 montiert. Anschließend wird der Außenlamellenträger 32 der radial inneren Kupplungsanordnung eingelegt, an dem der Sicherungsring 162 schon angebracht sein kann. Es wird dann das Lamellenpaket 26 eingeschoben, bevor oder nachdem der Innenlamellenträger 34 der radial inneren Kupplung eingelegt wird bzw. worden ist.

Unabhängig hiervon wird der Mitnehmer mit der Eingangsnabe 40 verbunden, beispielsweise durch Schweißen. Es kann dann der Kolben 60 eingelegt und es können die Rückstellfedem 90 eingelegt werden, worauf die Wandung 98 an der Eingangsnabe 40 angeschweißt wird. Daraufhin können der Betätigungskolben 62 und die Rückstellfedern 92 eingelegt und die Wandung 99 an der Eingangsnabe angeschweißt werden.

Zuletzt wird der die Eingangsnabe 40 und den Mitnehmer 310 umfassende Zusammenbau mit dem Mitnehmer in den Außenlamellenträger 28 der radial äußeren Kupplungsanordnung eingeschoben, wobei zuvor der Abstandsring 360 zu montieren ist. Der Mitnehmer 310 wird dann durch den Sicherungsring 312 am Außenlamellenträger 28 gesichert. Die damit im Wesentlichen fertig zusammengebaute Doppelkupplung kann dann als Modul auf die Getriebeeingangswellen 16 und 18 und die Pumpenantriebswelle 80 aufgeschoben und damit am Getriebe montiert werden. Als letztes werden die Leitungsanordnung 400 angeordnet und der Deckel 130 in die Gehäuseglocke eingesetzt und unter Vorspannung gegen den Mitnehmer 310 gepresst, so dass der Statorabschnitt 402 am Rotorabschnitt 440 unter Vorspannung anliegt. Diese Vorspannung des Deckels in Richtung zum Getriebe wird durch die Federanordnung, ggf. Tellerfeder 134, erreicht, die einerseits einen Toleranzausgleich erreicht und andererseits in Verbindung mit den den Dichtungen 444, 446, 448, 450 und 452 zugeordneten Federelementen zur Dichtheit der Drehdurchführung 402, 440 sorgt.

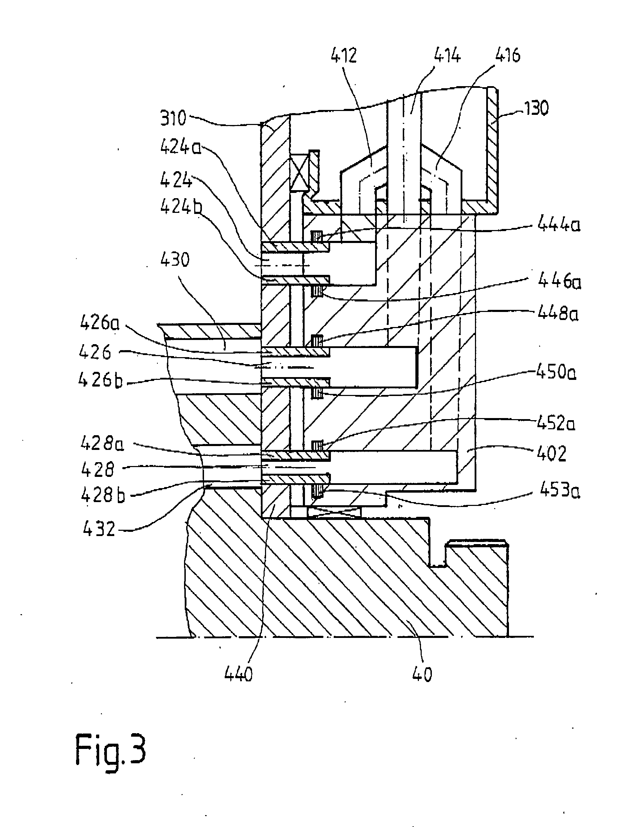

Fig. 3 zeigt eine Ausführungsvariante für die Drehdurchführung des Ausführungsbeispiels der Fig. 1. Anstelle der axial wirkenden Dichtungen 444, 446, 448, 450 und 452 sind radial wirkende Dichtringe 444a, 446a, 448a, 450a, 452a und 453a vorgesehen, die zwischen dem Statorabschnitt 402 und Ringblechen 424a, 424b, 426a, 426b, 428a, 428b wirksam sind, die am Mitnehmer 310 festgelegt und paarweise den Durchgangsbohrungen 424, 426 und 428 zugeordnet sind. Die Ringbleche sind vorzugsweise am Mitnehmer 310 angeschweißt und greifen mit einem jeweiligen Abschnitt in die Durchgangsbohrungen ein, wie in Fig. 3 gezeigt ist.

Fig. 4 zeigt ein weiteres Ausführungsbeispiel für eine erfindungsgemäße Doppelkupplung. Es werden nur die Unterschiede gegenüber dem Ausführungsbeispiel der Fig. 1 und 2 erläutert, wobei darauf hingewiesen wird, dass für analoge oder entsprechende Komponenten die gleichen Bezugszeichen verwendet sind.

Beim Ausführungsbeispiel der Fig. 4 ist der Deckel 130 als Druckgussteil ausgeführt, in dem die Leistungsanordnung 400 integriert ist. Mit dem Deckel ist ferner ein hülsenartiger Statorabschnitt 402 einstückig ausgeführt, der sich in axialer Richtung erstreckt und in eine zugeordete Aufnahme 500 der Eingangsnabe 40 eingreift. Zwischen dem Statorabschnitt 402 und der Eingangsnabe 40 sind in dem Aufnahmeraum 500 angeordnete Radiallager 502 und 504 sowie ein Dichtungsring 506 und Dichtringe 520, 522, 524, 526 wirksam. In Richtung zur Antriebseinheit stützt sich die Doppelkupplung unter Vermittlung des Mitnehmers 310 über ein Axiallager 158 am Deckel 130 ab, der sich seinerseits am Sicherungsring 136 abstützt.

Die Eingangsnabe 40 weist in einem die Aufnahme 500 nach radial außen begrenzenden Wandungsabschnitt Bohrungen 506, 508, 510 und 512 auf, die in den Fliehkraftdruckausgleichraum 96, in die Druckkammer 66, in den Fliehkraftdruckausgleichraum 94 bzw. in die Druckkammer 64 münden. Der Rotorabschnitt 402 weist entsprechende Bohrungen oder Öffnungen auf, über die die Bohrungen 406, 408, 410 und 412 und damit die Druckausgleichskammern 96 und 94 bzw. die Druckkammern 66 und 64 an der jeweils zugeordneten Leitung der Leitungsanordnung 400 angeschlossen sind. Zwischen der die Bohrungen 506, 508, 510 und 512 aufweisenden Wandung und dem Statorabschnitt 402 sind die schon erwähnten Dichtungsringe 520, 522, 524, 526 wirksam, die das Kühlöl und das Hydraulikdruckmedium voneinander trennen und in Verbindung mit dem Dichtungsring 506 für eine Abdichtung der beim Ausführungsbeispiel realisierten radialen Drehdurchführung (im Gegensatz zu einer axialen Drehdurchführung bei den Ausführungsbeispielen der Fig. 1 bis 3) nach außen sorgen. Als Rotorabschnitt 440 der Drehdurchführung kann der die Aufnahme 500 aufweisende Abschnitt der Eingangsnabe 40 aufgefasst werden.

Der Zusammenbau der Doppelkupplung 10 gemäß Fig. 4 kann in gleicher Weise wie beim Ausführungsbeispiel der Fig. 1 und 2 erfolgen. Der Gehäusedeckel 130, der die Leitungsanordnung 400 und den Rotorabschnitt 402 aufweist, wird als letztes eingebaut und hierbei mit dem Rotorabschnitt 402 in die Aufnahme 500 axial eingeschoben. Als letztes wird der Sicherungsring 136 montiert, wobei ggf. ähnlich wie bei Fig. 1 eine Federanordnung zwischen dem Sicherungsring und dem Deckel 130 vorgesehen sein kann, die den Deckel in Richtung zum Getriebe vorspannt, so dass ein Toleranzausgleich erreicht wird und Axialbewegungen aufgenommen werden. Eine andere Möglichkeit, Toleranzen und/oder Axialbewegungen auszugleichen, ist das Vorsehen einer entsprechenden Federanordnung zwischen dem Mitnehmer 310 und dem Deckel 130 im Bereich des Axiallagers 158, das beispielsweise mit einem entsprechenden Federelement gekoppelt sein könnte.

Zusammenfassend betrifft die Erfindung eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, umfassend eine einer ersten Getriebeeingangswelle zugeordnete erste Kupplungsanordnung und eine einer zweiten Getriebeeingangswelle zugeordnete zweite Kupplungsanordnung. Eine Eingangsseite der Kupplungseinrichtung weist eine an einer Abtriebswelle der Antriebseinheit direkt oder indirekt angekoppelte oder ankoppelbare Eingangsnabe oder Eingangswelle auf, die mit Eingangsseiten der ersten und zweiten Kupplungsanordnung in Drehmitnahmeverbindung steht. Für hydraulisch betätigbare Kupplungsanordnungen mit integrierten, sich im Betrieb mitdrehenden hydraulischen Nehmerzylindern bzw. für unter Einwirkung eines Betriebsmediums laufende, ggf. nasslaufende Kupplungsanordnungen, wird vorgeschlagen, dass in der Eingangsnabe oder/und wenigstens einer weiteren, mit der Eingangsnabe zur Drehmitnahme, vorzugsweise drehfest verbundenen Komponente der Kupplungseinrichtung wenigstens ein Hydraulikkanal oder Hydraulikdurchgang oder/und wenigstens ein Betriebsmediumkanal oder Betriebsmediumdurchgang ausgebildet ist, und dass wenigstens einer der Nehmerzylinder über den wenigstens einen Hydraulikkanal bzw. Hydraulikdurchgang sowie über wenigstens eine von radial außen oder/und von der Antriebseinheit her in Richtung zur Eingangsnabe bzw. der Komponente geführte oder führbare Hydraulikleitung an einer zugeordneten Hydraulikdruckquellenanordnung angeschlossen oder anschließbar ist bzw. dass wenigstens einer der Kupplungsanordnungen über den wenigstens einen Betriebsmediumkanal bzw. Betriebsmediumdurchgang und über wenigstens eine von radial außen oder/und von der Antriebseinheit her in Richtung zur Eingangsnabe bzw. der Komponente geführte oder führbare Betriebsmediumleitung Betriebsmedium von einer zugeordneten Betriebsmediumquellenanordnung zuführbar ist.

## Patentansprüche

1. Kupplungssystem, umfassend:
- eine Mehrfach-Kupplungseinrichtung, ggf. Doppel-Kupplungseinrichtung (10), für die Anordnung in einem Antriebsstrang eines Kraftfahrzeugs zwischen einer Antriebseinheit und einem Getriebe,
wobei die Kupplungseinrichtung eine einer ersten Getriebeeingangswelle (16) zugeordnete erste Kupplungsanordnung (20) und eine einer zweiten Getriebeeingangswelle (18) zugeordnete zweite Kupplungsanordnung (24) aufweist,
wobei von den beiden Getriebeeingangswellen die eine (18) sich durch die andere (16) erstreckt,
wobei eine Eingangsseite der Kupplungseinrichtung eine an einer Abtriebswelle der Antriebseinheit direkt oder indirekt angekoppelte oder ankoppelbare Eingangsnabe (40) oder Eingangswelle (im Folgenden nur als Eingangsnabe bezeichnet) aufweist, die mit einer Eingangsseite (48) der ersten Kupplungsanordnung und einer Eingangsseite (50) der zweiten Kupplungsanordnung in Drehmitnahmeverbindung steht, und
wobei die Kupplungsanordnungen (20, 24) jeweils mit einem integrierten, sich im Betrieb mitdrehenden hydraulischen Nehmerzylinder (56 bzw. 58) ausgeführt sind, über den die jeweilige Kupplungsanordnung auf hydraulischem Wege betätigbar ist;
- ein Hydrauliksystem zur Betätigung der Kupplungsanordnungen auf hydraulischem Wege unter Vermittlung der hydraulischen Nehmerzylinder (56, 58), welches wenigstens eine Hydraulikdruckquellenanordnung umfasst;
wobei in der Eingangsnabe (40) oder/und wenigstens einer weiteren, mit der Eingangsnabe zur Drehmitnahme, vorzugsweise drehfest verbundenen Komponente (310) der Kupplungseinrichtung wenigstens ein Hydraulikkanal (430) oder Hydraulikdurchgang (424, 426) ausgebildet ist, wobei wenigstens einer der Nehmerzylinder (56, 58) über den wenigstens einen Hydraulikkanal (430) bzw. Hydraulikdurchgang (424, 426) an der Hydraulikdruckquellenanordnung angeschlossen oder anschließbar ist,
wobei der Hydraulikkanal bzw. Hydraulikdurchgang einer Drehdurchführung (402, 440) zugehörig oder daran angeschlossen oder anschließbar ist,
**dadurch gekennzeichnet,**
**dass** die Kupplungsanordnungen (20, 24) für ein Laufen unter Einwirkung eines Betriebsmediums vorgesehen, insbesondere als nasslaufende Lamellen-Kupplungsanordnungen (20, 24) ausgeführt sind, und dass ein Betriebsmedium-Versorgungssystem zur Versorgung der Kupplungsanordnungen mit Betriebsmedium vorgesehen ist, welches wenigstens eine Betriebsmediumquellenanordnung umfasst, über die den Kupplungsanordnungen (20, 24) Betriebsmedium zuführbar ist und
**dass** wenigstens eine der Kupplungsanordnungen (20, 24) über einen Betriebsmediumkanal (100) bzw. Betriebsmediumdurchgang (428) Betriebsmedium von der Betriebsmediumquellenanordnung zuführbar ist, wobei der Betriebsmediumkanal (100) bzw. Betriebsmediumdurchgang (428) einer Drehdurchführung (402, 440) zugehörig oder daran angeschlossen oder anschließbar ist, und
**dass** die Drehdurchführung bzw. der Hydraulikabschnitt oder/und der Betriebsmediumabschnitt als radiale Drehdurchführung ausgeführt ist (Fig. 4).

2. Kupplungssystem nach einem der Ansprüche 1,
**dadurch gekennzeichnet, dass** die Drehdurchführung einen im Betrieb im wesentlichen stationären Statorabschnitt (402) und einen im Betrieb rotierenden Rotorabschnitt (440) aufweist, wobei der Rotorabschnitt von der Eingangsnabe selbst oder/und der mit der Eingangsnabe zur Drehmitnahme verbundenen, vorzugsweise in einem Momentenübertragungsweg zwischen einer die Eingangsnabe (40) umfassenden Eingangsseite der Kupplungseinrichtung und wenigstens einer Ausgangsseite der Kupplungseinrichtung liegenden Komponente (310) der Kupplungseinrichtung gebildet ist.

3. Kupplungssystem nach einem der Ansprüche 1 bis 2,
**dadurch gekennzeichnet, dass** die Kupplungseinrichtung in einen von einer Getriebegehäuseglocke (14) begrenzten Aufnahmeraum (12) aufgenommen ist, der durch eine ggf. deckefartige Wandung (130) in Richtung zur Antriebseinheit geschlossen ist und eine Öffnung zur Ankoppelung der Eingangsnabe (40) an einer Abtriebswelle der Antriebseinheit, ggf. über eine Torsionsschwingungsdämpferanordnung, aufweist.

4. Kupplungssystem nach Anspruch 1,
**dadurch gekennzeichnet, dass** die Kupplungsanordnungen (20, 24) als Lamellen-Kupplungsanordnungen ausgebildet sind, wobei von einem ersten Lamellenpaket (22) der ersten Kupplungsanordnung und einem zweiten Lamellenpaket (26) der zweiten Kupplungsanordnung das eine (22) das andere (26) zumindest in einem axialen Überlappungsbereich radial außen umgibt,
wobei die Eingangsnabe (40) mit einem Außenlamellenträger (28) der ersten Kupplungsanordnung und einem Außenlamellenträger (32) der zweiten Kupplungsanordnung in Drehmitnahmeverbindung steht,
wobei die Außenlamellenträger jeweils einen sich bezogen auf eine Drehachse der Kupplungseinrichtung im Wesentlichen axial erstreckenden, als Eingangsseite der jeweiligen Kupplungsanordnung dienenden Lamellenhalteabschnitt (48 bzw. 50) und einen sich von diesem in radialer Richtung anschließenden, mit dem Lamellenhalteabschnitt einstückigen oder daran fest angebrachten Trägerabschnitt (44 bzw. 46) aufweisen, und
wobei ein jeweiliger Innenlamellenträger (30 bzw. 34) der ersten und zweiten Kupplungsanordnung, der als Ausgangsseite der betreffenden Kupplungsanordnung dient, mit der ersten bzw. zweiten Getriebeeingangswelle in Drehmitnahmeverbindung steht oder bringbar ist,
wobei der zum radial inneren Lamellenpaket (26) zugehörige Außenlamellenträger (32) am Außenlamellenträger (28) des radial äußeren Lamellenpakets gehalten ist.

5. Kupplungssystem nach Anspruch 4,
**dadurch gekennzeichnet, dass** die Kupplungsanordnungen jeweils mit einem integrierten, sich im Betrieb mitdrehenden hydraulischen Nehmerzylinder (56, 58) ausgeführt sind, über den die jeweilige Kupplungsanordnung auf hydraulischem Wege betätigbar ist, dass mindestens einer der Betätigungskolben sich in wesentlichen in axialer Richtung erstreckende Betätigungsabschnitte aufweist, denen Aussparungen im Trägerabschnitt eines der Außenlamellenträger zugeordnet sind, um durch die Aussparungen auf das radial äußere Lamellenpaket (22) wirken zu können.

6. Kupplungssystem nach Anspruch 4,
**dadurch gekennzeichnet, dass** in den Lamellenhalteabschnitten (48, 50) Durchtrittsöffnungen für das Betriebsmedium, vorzugsweise Kühlöl, vorgesehen sind, so dass das Betriebsmedium zwischen die Lamellen der Lamellenpakete (22, 26) eintreten und die Lamellen kühlen kann.

7. Kupplungssystem nach Anspruch 5,
**dadurch gekennzeichnet, dass** ein Nehmerzylinderraum (66) des zur Betätigung des radial inneren Lamellenpakets (26) dienenden Nehmerzylinders (58) zwischen einer Wandung (98) und einem Betätigungskolben (62) des Nehmerzylinders ausgebildet ist, wobei die Wandung (98) einen Fliehkraftdruckausgleichsraum begrenzt, der dem Betätigungskolben (60) der Kupplungsanordnung (20) mit dem radial äußeren Lamellenpaket (22) zugeordnet ist.

8. Kraftfahrzeug-Antriebsstrang, umfassend eine vorzugsweise als Verbrennungsmotor ausgeführte Antriebseinheit, ein Getriebe, insbesondere Lastschaltgetriebe, und ein Kupplungssystem bzw. eine Kupplungseinrichtung nach einem der vorhergehenden Ansprüche.
